(19) Europäisches Patentamt
European Patent Office
Office européen des brevets

(11) EP 1 951 810 B1

(12) **EUROPEAN PATENT SPECIFICATION**

(45) Date of publication and mention of the grant of the patent:
**29.07.2009 Bulletin 2009/31**

(21) Application number: **06809699.9**

(22) Date of filing: **25.10.2006**

(51) Int Cl.:
***C08L 67/02*** *(2006.01)* ***C08L 77/06*** *(2006.01)*
***B29B 9/06*** *(2006.01)*

(86) International application number:
**PCT/IB2006/053924**

(87) International publication number:
**WO 2007/049233 (03.05.2007 Gazette 2007/18)**

(54) **STABLE POLYAMIDES FOR SIMULTANEOUS SOLID PHASE POLYMERIZATION OF POLYESTERS AND POLYAMIDES**

STABILE POLYAMIDE ZUR GLEICHZEITIGEN FESTPHASENPOLYMERISATION VON POLYESTERN UND POLYAMIDEN

POLYAMIDES STABLES POUR LA POLYMERISATION SIMULTANEE EN PHASE SOLIDE DE POLYESTERS ET DE POLYAMIDES

(84) Designated Contracting States:
**AT BE BG CH CY CZ DE DK EE ES FI FR GB GR HU IE IS IT LI LT LU LV MC NL PL PT RO SE SI SK TR**

(30) Priority: **25.10.2005 US 730197 P**
**25.10.2005 US 730198 P**

(43) Date of publication of application:
**06.08.2008 Bulletin 2008/32**

(73) Proprietor: **M & G Polimeri Italia S.P.A.**
**03010 Patrica (FR) (IT)**

(72) Inventors:
- **GIOVANNINI, Arianna**
  **Sharon Center, Ohio 44274-0590 (US)**
- **CALLANDER, Douglas David**
  **Sharon Center, Ohio 44274-0590 (US)**
- **SCRIVANI, Maria Teresa**
  **Sharon Center, Ohio 044274-0590 (US)**
- **FERRERO, Simone**
  **Sharon Center, Ohio 44274-0590 (US)**
- **STRAUCH, Joachim**
  **Sharon Center, Ohio 44274-0590 (US)**

(74) Representative: **Gerbino, Angelo et al**
**Jacobacci & Partners S.p.A.**
**Corso Emilia, 8**
**10152 Torino (IT)**

(56) References cited:
**EP-A2- 0 964 031**
**EP-A2- 1 063 070**
**WO-A-01/09245**
**WO-A-93/23474**
**WO-A-20/05110694**
**WO-A-20/06079044**
**US-A- 5 747 548**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Field of the Invention

This invention relates to polyamides suitable for the simultaneous solid phase polymerization of polyesters and polyamides at polyester conditions.

### Background of the Invention

Many industrial articles are comprised of multiple components to economically improve their properties. Multi-component articles made from thermoplastic and thermoset materials are generally manufactured with a final melt -mixing extruder that homogenously combines the various components into an article such as a sheet, film, fiber, a bo ttle or an injection molded part, frequently called a preform. The article, particularly the preform, is often further processed to make another article such as a bottle, tray, jar, or bag.

Many packages integrate the material s into a separate layer in the wall of the container. This is accomplished by using one extruder to melt a major component and form the article while a second extruder melts the barrier material and injects the barrier material in a separate layer of the article that forms the wall of the container. United States Patent 4,501,781, for example, describes improving passive barrier properties of the container by incorporating a polyamide layer and a polyester layer to make a mul ti-layer container.

United States Patent 4,501,781 also teaches that the polyamide can be homogeneously blended with the polyester in the container wall as opposed to the polyamide being placed in a separate layer. When using homogeneously combined materials, manufacturing economies are maximized the earlier the materials are combined. In the case of polyamides and polyesters, both benefit from the thermal process known as solid phase polymerization.

Solid phase polymerization efficiently increases the n umber average molecular weight of both polyesters and polyamides. The increase in number average molecular weight can be measured with many techniques such as inherent viscosity (Inh. V.) and intrinsic viscosity (I.V.), relative viscosity (R.V.), and the total number of end groups (TEG). In the solid phase polymerization process the pellets are exposed to temperatures less than the temperature at which the pellets become liquid. This temperature exposure occurs in the presence of a driving force such as an inert gas or vacuum. The by -products of the polymerization reaction are removed from the pellet thus forcing an equilibrium increase in the molecular weight of the polymer. The thermal processing can occur from 40°C to a temperature slightly less than the temperature at which the pellet becomes liquid, such as 1°C, or for more typically for commercial reasons, 5°C below the temperature at which the pellet becomes liquid.

Because polyesters and polyamides are both pelletized during their respective manufacture, United States Patent No. 5,340,884 advocates combining the polyester and polyamide at the first cutting step after polycondensation to eliminate additional and/or subsequent extrusion and cutting steps. But, United States Patent No. 5,340,884 also cautions against blending the polyamide and polyester as they are removed from the polycondensation reactor if the polyester/polyamide blend will be subjected to further thermal processing such as solid state polymerization. Subsequent thermal processing may create undesirable color and/or haze and alter the molecular weight of the polyamide during extended time at elevated temperatures.

United States Patent No. 6,238,233 teaches blending acid terminated polyamides with polyester. However, United States Patent No. 6,238,233 cautions against blending the molten polyester with acid terminated polyamide as it is removed from the polycondensation reactor before it is pelletized if the polyester/polyamide blend will be subjected to solid state [phase] polymerization since undesirable color and/or haze may develop during extended time at elevated temperatures.

WO 2005/110694 A1 teaches the use of the compartmentalized pellet to reduce the color caused by simultaneously thermally treating a polyester -polyamide blend. According to WO 2005/110694 A1, the polyester-polyamide composition does not exhibit increased-color during thermal processing when the majority of the polyester is placed in one compartment or zone of the pellet and the majority of the polyamide is placed in another compartment or zone prior to thermal processing. WO 2005/110694 A1 acknowledges that certain compounds are not stable at high processing temperatures and extended processing times. WO 2005/110694 A1 teaches to use a reaction enhancer or raise the starting molecular weight to allow the pellet to solid phase polymerized at a lower temperature and shorter time if one of the components cannot withstand the higher process temperatures. These approaches increase the cost to thermally process the materials together.

There exists there fore, the need for a polyamide composition which allows a pellet containing polyester and polyamide to be solid phase polymerized without detrimental impact on the properties of either material.

Summary of the Invention

Disclosed in this invention is a resin composition comprising a polyester selected from the group consisting of crystallizable polyesters that have at least 85% of the crystallizable polyester acid moieties derived from the group consisting of terephthalic acid, 2,6 naphthalene dicarboxylic acid and their diesters and a polyamide comprising a residue selected from the group consisting of the repeating unit of amino caproic acid and the repeating unit of A-D, wherein A is the residue of a dicarboxylic acid comprising adipic acid, isophthalic a cid, terephthalic acid, 1,4-cyclohexanedicarboxylic acid, or naphthalenedicarboxylic acid, or a mixture thereof, and D is a residue of a diamine comprising m-xylylene diamine, p-xylylene diamine, hexamethylene diamine, ethylene diamine, or 1,4 cyclohexaned imethylamine, or a mixture thereof, wherein the polyamide has a triamine content after hydrolysis of less than 0.22 and a carboxyl content of outside the range of 20 to 80 percent of the total number of end groups. It is further disclosed that the resin composition can have at least 90% of the crystallizable polyester's acid moieties derived from terephthalic acid and at least 90% of the crystallizable polyester's glycol moieties are derived from ethylene glycol. A preferred polyamide, MXD6 is also disclosed. It is also disclosed that the composition may exist as a resin pellet with the polyamide dispersed into the polyester or as a compartmentalized pellet comprising a first compartmentalized zone and a second compartmentalized zone, wherein the first compartmentalized zone is comprised of the polyester and the second compartmentalized zone is comprised of the polyamide.

A process for solid phase polymerizing a polyester and a polyamide at the same temperature for the same amount of time is also disclosed, wherein said process comprises the steps of A) Selecting a polyester from the group consisting of crystallizable polyesters that have at least 85% of the crystallizable polyester acid moieties derived from the group consisting of terephthalic acid, 2,6 naphthalene dicarboxylic acid and their diesters and a polyamide comprising a residue selected from the group consisting of the repeating unit of amino caproic acid and the repeating unit of A -D, wherein A is the residue of a dicarboxylic acid comprising adipic acid, isophthalic acid, terephthalic acid, 1,4 -cyclohexanedicarboxylic acid, or naphthalenedicarboxylic acid, or a mixture thereof, and D is a residue of a diamine comprising m-xylylene diamine, p-xylylene diamine, hexamethylene diamine, ethylene diam ine, or 1,4 cyclohexanedimethylamine, or a mixture thereof, wherein the polyamide has a triamine content after hydrolysis of less than 0.22 and a carboxyl content outside the range of 20 to 80 percent of the total number of end groups; B) Combining the pol yester and polyamide into resin pellets so that the resin pellets comprise both the polyester and polyamide; C) Heating the resin pellets to a temperature in the range of 40 °C to 1°C below which the pellets become liquid; and D) Maintaining the resin pell ets in the temperature range for sufficient time to increase the intrinsic viscosity of the polyester by at least 0.05 dl/g.

It is further disclosed that that at least 90% of the crystallizable polyester's acid moieties can be derived from terephthalic a cid and 90% of the crystallizable polyester's glycol moieties can be derived from ethylene glycol. Again, the preferred polyamide for the process is MXD6 nylon.

It is also disclosed that the polyamide and polyester may be combined into the pellets so th at the polyamide is dispersed into the polyester or combined into compartmentalized pellets comprising a first compartmentalized zone and a second compartmentalized zone, wherein the first compartmentalized zone is comprised of the polyester and the second compartmentalized zone is comprised of the polyamide. It is further disclosed to heat the pellets to a temperature in the range of 165°C and 235°C wherein at least 90% of the crystallizable polyester's acid moieties are derived from terephthalic acid and at least 90% of crystallizable polyester's glycol moieties are derived from ethylene glycol. Also disclosed is that the crystallizable polyester comprises lithium sulfoisophthalate.

Brief Description of the Drawings

Fig. 1 depicts a resin pellet with two compartments or zones in the core -sheath configuration.
Fig. 2 depicts a resin pellet with two compartments or zones in the core -sheath configuration where the core is encapsulated, surrounded, or enclosed by an outer sheath layer.
Fig. 3 depicts a resin pellet with three compartments or zones in a multi-layered or sandwich configuration.
Fig. 4 depicts a resin pellet of three compartmentalized zones configured in two concentric layers surrounding a core.

Detailed Description of the Invention

This specification discloses the characteristics of a polyamide and crystallizable polyester that allow the practitioner to solid phase polymerize both the polyamide and crystallizable polyester in the same vessel under the same conditions without significantly negatively impacting the properties of the resulting blend.

Solid phase polymerization is an important industrial process. It efficiently increases the number average molecular weight of both polyesters and polyamides. The increase in number average molecu lar weight can be measured

with many techniques such as intrinsic viscosity (I.V.), relative viscosity (R.V.), and the total number of end groups (TEG). In the solid phase polymerization process the pellets are exposed to temperatures less than the temper ature at which the pellets become liquid. This temperature exposure occurs in the presence of a driving force such as an inert gas or vacuum. The by -products of the polymerization reaction are removed from the pellet thus forcing an equilibrium increase in the molecular weight of the polymer.

The solid phase polymerization (SSP) conditions for a crystallizable polyester -polyamide combination generally mirror the solid phase polymerization conditions for crystallizable polyester and preferably include a temperature of from about 200°C to about 235°C, and more preferably from about 215°C to about 235°C. The solid phase polymerization is carried out for a time sufficient to raise the molecular weight of one or more of the components to the desired level, which will depend upon the application and initial intrinsic viscosity. The preferred molecular weight of a polyester used to make bottles, generally corresponds to an intrinsic viscosity (I.V.) from about 0.68 to about 0.88 deciliter/gram, as determined b y the methods described in the methods section. The time required to reach this molecular weight may range from about 8 to about 45 hours. Typical increases in I.V. of the crystallizable polyester are at least 0.05 dl/g, with increases of 0.2 to 0.4 dl/g being more typical.

What has been observed is that certain polyamide s form gels when the polyamide is exposed to polyester solid phase polymerization conditions of sufficient temperature and time. While one can utilize the teachings of WO 2005/110694 A1 to vary the time and temperature conditions of the solid phase polymerization, this has proven only to reduce the gel s and did not totally eliminate them.

What has been discovered is tha t a major cause of the gel formation is the presence of triamine in the polyamide. While not to be bound by any theory, it is believed that the triamine is formed by the reaction of the two amino end groups with each other , releasing -$NH_3$ to form a tertiary amine, or triamine. The starting compounds are shown as EQ-1 which form the product of EQ-2

EQ-1:

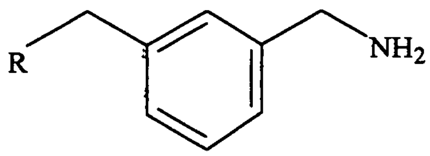

+

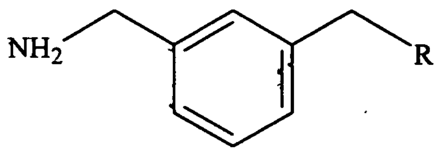

Where R = $NH_2$ or the continuing polymer chain.

EQ-2:

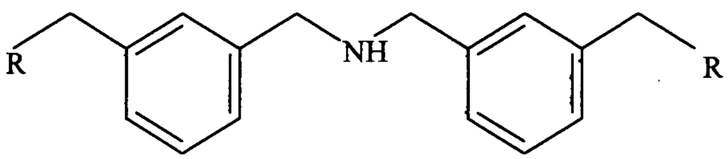

EQ-2 will further react with EQ-3

EQ-3:

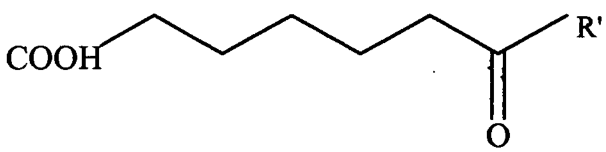

Where R' = OH or the continuing polymer chain to form EQ-4.

EQ-4:

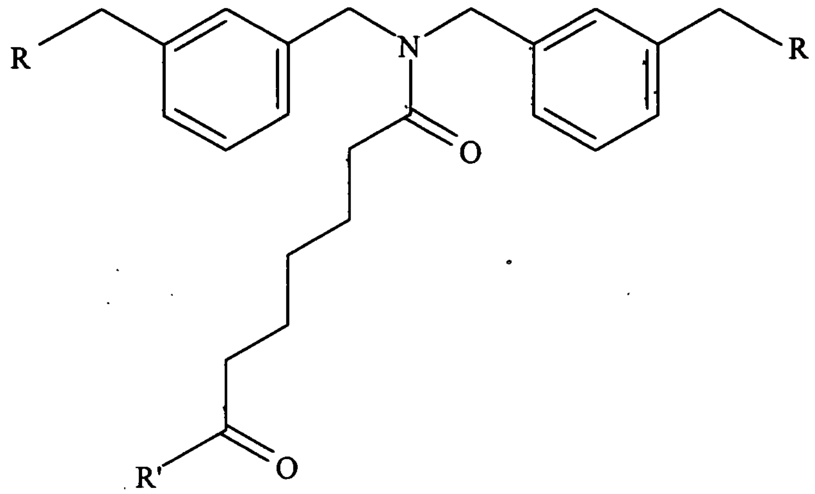

Which is believed to be the branched gel.

The amount of tertiary amine in the polyamide can be indirectly measured by subjecting the polyamide to hydrolysis as described in the test method section. Under hydrolysis, the tertiary amine will reduce to the compound of the following formula EQ -5.

EQ-5

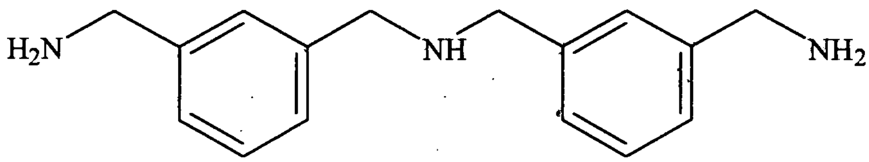

The amount of the triamine, product EQ -5, must be below a certain level to eliminate the gel formation. For the purposes of this specification, the claimed polyamide is characterized as having a triamine content after hydrolysis less than 0.22 weight percent which is the amount of the compound of EQ -5 in the polyamide sample divided by the weight of the polyamide sample, expressed in percent.

The phrases "triamine content" and "triamine content after hydrolysis", as used in the specification and claims, mean the amount of material of EQ-5 after hydrolysis of the polyamide expressed as a weight percent of the total amount of the polyamide before hydrolysis. If the triamine content is expressed without a unit, then weight percent is always assumed. For example, a triamine content of 0.22 is a triamine content of 0.22 weight percent , or 0.22%.

By keeping the triamine content after hydrolysis below the required level, the polyamide can be solid phase polymerized at polyester temperatures without producing gels. The data demonstrate that both the pellets of polyamide homogenously dispersed in polyester and the pellets of the compartmentalized pellet with one compartmentalized zone comprising polyester and another compartmentalized zone comprising polyamide will benefit from the polyamide with low, or preferably, no triamine content. Because the compartmentalized pellet keeps the polyamide and polyester separate, the gels which form in the polyamide are large and visibly apparent. It is believed that the size of the polyamide doma ins in the homogeneously dispersed pellet is so small that the gels which are formed are observed primarily as increased haze. Regardless of the gel formation, the shift in colour still occurs in the homogenously dispersed pellet when the polyamide with the low triamine content is thermally treated. Therefore, the best results are achieved when

the polyamide with the low triamine content and the crystallizable polyester are solid phase polymerized in the compartmentalized pellet structure.

The triamine content after hydrolysis can be measured using the hydrolysis technique described in the methods section.

One way to keep the triamine content low is to run the reaction in the presence of excess amounts of dicarboxylic acid.

Polyamides suitable for this invention can be described as comprising the repeating unit amino caproic acid or A-D, wherein A is the residue of a dicarboxylic acid comprising adipic acid, isophthalic acid, terephthalic acid, 1,4 -cyclohexanedicarboxylic acid, or naphthalenedicarboxyl ic acid, or a mixture thereof, and D is a residue of a diamine comprising m-xylylene diamine, p-xylylene diamine, hexamethylene diamine, ethylene diamine, or 1,4 cyclohexanedimethylamine, or a mixture thereof. These polyamides can range in number average molecular weight from 2000 to 60,000 as measured by end -group titration.

Relative Viscosity is used to determine molecular weight as it is not subject to different end groups that may occur as a result of side reactions during the manufacturing process. The Relative Viscosity selected should be one which meets the required levels when the polyamide and polyester are melt blended. Generally this is in the range of 1.0 to 3.0, with the most desirable properties obtained when the Relative Viscosity is between 1.4 and 2.0.

These polyamide s can also be described as comprising a reaction product selected from the group consisting of the reaction of amino caproic acid with itself and the reaction product of a residue of dicarboxylic acid comprising adipic acid, isophthalic acid, terephthalic acid, 1,4 - cyclohexanedicarboxylic acid, or naphthalenedicarboxylic acid with a residue of a diamine comprising m-xylylene diamine, p-xylylene diamine, hexamethylene diamine, ethylene diamine, or 1,4 cyclohexanedimethylamine .

Those skilled in the art will recognize many of the combinations as well known commercially available polyamides. The reaction product of the residues of sebacic acid with hexamethylene diamine is nylon 6 .10 and the reaction product of the residues of adipic acid and hexamethylene diamine is nylon 6.6. Nylon 6.12 is another nylon which benefits from the invention. Nylon 6 is a special type of polyamide which is made by the opening of caprolactam and then polymerizing the resulting amino ca proic acid which has a formula of $H_2N-(CH_2)_5-COOH$. The preferred polyamides are the reaction product of the residues of adipic acid and m-xylylene diamine, known as poly-m-xylylene adipamide. This product is commercially known as MXD6 or nylon MXD6 and can be purchased from Mitsubishi Gas Chemical Company, Japan.

However, the weight percent of triamine content after hydrolysis of the polyamide must be less than 0.22, preferably less than 0.21 , with less than 0.1 and even less than 0.10 the most preferred levels.

It is further preferred that the polyamide have an unbalanced number of amino and acid end groups. It has been discovered that the polyamide is more stable during solid phase polymerization when the end groups are highly out of balance. By keeping the ra tio severely unbalanced, the solid state polymerization rate of the polyamide is very slow, thus limiting the molecular weight increase of the polyamide. This means that during solid phase polymerization, the polyester can undergo an increase in molecular weight while the relative viscosity of the polyamide remains relatively unchanged.

Typically, for lower solid phase polymerization rates, the carboxyl content will be less than 20 percent of the total number of end groups or greater than 80% of the total number of end groups. For even more reduced rates, the practioner should keep the number of carboxyl end groups content less than 10% or greater than 90% of the total number of end groups. Another way to express this characterization is that the ca rboxyl content is outside the range of 20 to 80 percent of the total number of ends. This means the carboxyl content cannot be between 20 and 80 percent, but could be 15 or 85 percent.

The carboxyl content is easily determined by analyzing the polyamide for the number of carboxyl end groups and the number amino end groups as described in the methods section. The carboxyl content is then the number of carboxyl end groups divided the sum of the number of carboxyl end groups and the number of amino end gr oups. Using Example 3 in Table I, the number of carboxyl groups is 228, the number of amino groups is 7, the carboxyl content is therefore 228/(228+7) = 97%.

The preferred polyamide is MXD6 made in any of the following manners. First, while the examples below detail the process parameters, all the processes use adipic acid and meta - xylylenediamine where the molar ratio of adipic acid and meta -xylylenediamine can be varied in the range of 1.5:1 to 1.001:1, preferably 1.2:1 to 1.005:1, especially 1.1:1 to 1.007:1, especially preferred 1.05:1 to 1.01:1.

One preferred process is a batch process using a stirred steel autoclave operating at a pressure between 2 and 10 bars, preferably between 3 and 8 bars and especially preferred between 4 and 6 bars. Thereby a two step pressure profile is applied. The raw materials are placed in the vessel and then heated to 120°C inside the autoclave. After a rea ching a pressure of 2 bars, water is distilled off, until a ca. 90 w.% mixture is obtained. During distillation , the temperature is increased to 155 - 165 °C. The mixture is then further heated until the desired pressure of 4 bars is reached. At 4 bars the remaining water is distilled off and temperature is increased to 245 - 250 °C. Afterwards the

pressure is r educed to atmospheric pressure. If the viscosity needed for pelletizing has not yet been reached one can use a post melt condensation phase at 245 -265°C under reduced pressure or nitrogen flow for 5-30 minutes. After reaching the proper viscosity the polyamide is discharged from the vessel as a strand through a water bath and is cut into pellets.

The temperature of the contents inside the autoclave should not exceed 265 °C during the whole condensation process. The relative viscosity measured after pelletizing is in the range between 1.45 and 1.70.

The polyamide may be made in a continuous process by heating salt solutions of adipic acid and meta-xylylene diamine at a temperature of 210 to 330°C, preferentially 250 to 300 °C, more preferably 260 to 280 °C, then preferably separating the prepolymer batchwise or preferably in a continuous way and recycling the separated meta-xylylene diamine. The prepolymer is then kept under a pressure between 1 and 20 bar, preferably between 1.5 and 15 bar, and most preferably between 4 and 6 bar at a temperature between 230 to 330°C, especially preferably between 260 to 280°C and polycondensed.

Another process to make the polyamide comprises heating a salt solution of the diamine and the dicarboxylic acid under a pressure between 2 and 10 bar, preferably 4 and 6 bar within a residence time of 60 second s, with at least 95% degree of conversion and a maximum of 7 weight percent water. This polymer can be achieved by running the salt solution through a in sectioned tubular designed evaporation zone, in which by heating and water evaporation a two phase flow is developed; thereby driving the major amount of solution water into the gas phase. The used aqueous solutions have normally a monomer content of 30 to 70 w.%, preferably 45 to 65 w.%.

An especially preferred process consists of running the aqueous salt solution with a temperature of 50 to 100°C batchwise or preferably continuously into an evaporation zone, where the salt solution is heated under a pressure of 2 to 10 bar, preferably 4 to 6 bar to a temperature of 250 to 300 °C, preferably 260 to 280°C. The residence time in the evaporation zone is normally 1 to 300 seconds, preferably 30 to 120 seconds and especially preferred 30 to 60 seconds. At the exit of th e evaporation zone the conversion ranges from 80 to 100%, preferably 90 to 99.5%, especially preferred 95 to 99%, particularly 96 to 98 % and depending on the pressure used , the water content is normally 0.01 to 10 w.%, preferably 0,1 to 5 w.%, with 1 to 3 w.% especially preferred. The evaporation zone is favourably designed as a pack of tubes, in which the diameter of the single tubes is periodically tubular or "split shaped" formed. Further it was proved to be advantageous to run the mixture of prepolym er and steam before separating the phases through a tubular "substance exchange zone", which is modified with fixtures. Here the pressure and temperature conditions of the evaporation zone are kept constant. The fixtures, for example, are carrier material s like Raschig rings, metal rings and especially carrier material made of wire gauze to create a large surface area. In this design, the phases, prepolymer and steam, come into close contact. This reduces the amount of meta-xylylene diamine set free by the steam. The residence time in this "substance exchange zone" is normally 1 to 5 minutes. The two phase mixture of steam and prepolymer is separated after leaving the evaporation zone and "substance exchange zone" respectively. The generated vapours contain water and traces of meta-xylylenediamine, which is liberated by the evaporation of the water. Thereby only extremely small amounts of meta -xylylene diamine are contained in the gas phase. (<0.1 w.% based on the polymer throughput). The va pours can be fed into a column and rectified to regain the meta -xylylene diamine. Appropriate columns are carrier material columns, bubble-cap columns or sieve -plate columns with 5 to 15 theoretical plates. The column is run under the same pressure conditions as the evaporation zone. Preferably the rectified meta -xylylene diamine is fed back to the polymerization zone.

The obtained prepolymers, which depending upon the degree of conversion of low molecular weight polyamide and low amount of non -converted salts, will normally have a relative viscosity = < 1.2, are then introduced into the polymerization zone. In the polymerization zone, the obtained melt can be polycondens ed at a temperature between 245 and 285°C, preferably between 255 and 275°C and a pressure from 2 to 10 bar, especially from 4 to 6 bar.

In one preferred process the obtained polyamide can be exposed to a discharge zone during simultaneous removal of rest water. Appropriate discharge zones are for example extruders. The melt, which is now liberated from water, can be pelletized. After polycondensation, the melt can be treated in any one of the well known post -treatments, for example, under water pelletizing (spherical and cylindrical chips) or strand pelletizing. The obtained resin can also be subjected to an extraction, which can be performed batchwise or continuously. Water, $C_1$-$C_8$-alkanols like methanol or ethanol can be used as extractants. Water is preferred. In preferred process the polyamide is pelletized to spherical chips using under water pell etizing. The relative viscosity after leaving the extruder is in the range of about 1.45 to about 1.55.

The extracted polyamide can then undergo a solid phase or solid state polymerization (SSP) for final adjustment of the relative viscosity. This can be performed under vacuum or under an inert gas as nitrogen or Argon, preferably nitrogen. The temperature can vary over a range, normally between 120 and 230°C, preferably between 130 and 210°C, with 140 to 190°C especially preferred.

The final relative viscosities after SSP are between 1.55 and 2.00, preferably between 1.60 to 1.9 and especially between 1.65 and 1.75. After SSP the water content is usually less than 250 ppm.

In all of the above cases, it would be preferable to avoid the pelletizing step and combine the polyamide with

the polyester by introducing the polyamide into a zone of a compartmentalized pellet with the polyester introduced into another. This pellet construction is described in further detail later.

The polyesters suitable for this invention are the crystallizable polyesters. The term crystallizable means that the polyester, such as polyethylene terephthalate, polyethylene naphthalate or their copolymers can become semi -crystalline, either through orientation or heat induced crystallinity. It is well known that no plastic is completely crystalline and that the crystalline forms are more accurately described as semi -crystalline. The term semicrystalline is well known in the prior art and is meant to describe a polymer that exhibits X-ray patterns that have sharp features of crystalline regions and diffuse features characteristic of amorphous regions. It is also well known in the art that semi -crystalline should be distinguished from the pure crystalline and amorphous states. Differential Scanning Calorimetry (D.S.C.) can be used to measure the amount of crystallinity. Typical crystallinity levels range from 5 to as high 65 percent depending upon the type of thermal treatment and nucleation techniques used. Typically a cry stallizable polyester will be considered amorphous, but still crystallizable, when it has less than 5% crystallinity.

It is generally accepted that a polyester is crystallizable, that is, capable of becoming semi - crystalline, when the number of moles of the monomers beyond the first acid and first diol is less than 15% of the total number of moles of acids and diols in the polymer. The crystallizable polyester can therefore generally be described as comprising the derivative of a first acid and a first diol, wherein the number of moles of the first acid plus the number of moles of the first diol divided the total number of moles of acids and glycols in the polymer is at least 85%.

It is important to recognize that there are special cases where the homopolymer is not crystallizable. For instance polyethylene isophthalate is derived from 100 moles of isophthalic acid reacted with 100 moles ethylene glycol, yet is an amorphous polymer. This polymer is excluded from the crystallizable polyesters because it is not crystallizable.

Therefore the preferred crystallizable polyester more specifically comprises the derivative of a first acid selected from the group consisting of terephthalic acid, 2, 6 naphthalenedicarboxylic acid, and a first diol selected from the group consisting of ethylene glycol, 1,4 butane diol and 1,3 propane diol, wherein the number of moles of the first acid plus the number of moles of the first diol divided the total number of moles of acids and glycols in the polymer is at least 85%.

Those skilled in the art will recognize the reactions of terephthalic acid with ethylene glycol as polyethylene terephthalate (PET), the reaction of terephthalic acid with 1,4 butane diol as polybutylene terephthalate (PBT) and the reaction of terephthalic acid with 1, 3 propane diol as polytrimethylene terephthalate (PIT). The reactions of 2, 6 naphthalene dicarboxylic acid with ethylene glycol is known as polyethylene naphthalate.

It should be appreciated that the measurement of the total amount of acids and glycols reacted into the polymer should be done upon the polymer after polymerization. Determination of the species and the relative amount of each species is done by depolymerizing the polymer into its respective monomers and quantifying the res ultant monomers via gas chromatography.

However, it is important to recognize that while certain monomers may not be intentionally charged into the reactor, they are nevertheless formed and incorporated into the chain. For example, it is well known that the polymerization of the dicarboxylic acid with ethylene glycol will also have approximately 1 to 2 moles of diethylene glycol for the 100 moles of dicarboxylic acid, 99 to 98 moles of ethylene glycol.

These crystallizable polymers exist in their homopolymer and copolymer form. A copolymer of polyethylene terephthalate or polyethylene terephthalate copolymer is also expressed as copolyethylene terephthalate. The class of polyesters known as the polyethylene terephthalates or PET are those polyesters wherein at least 85% of the repeating acid units based upon the total number of acid units are derived from terephthalic acid or the diester of terephthalic acid, at least 85% of the repeating glycol units based upon the total number of glycol units are derived from ethylene glycol and the remainder of the acid and/or glycol units are derived from at least one other different repeating unit. A third, and subsequent repeating unit could be, for example, derived from isophthalic acid, 2, 6 naphthalene dicarboxyl ic acid, cyclohexanedimethanol, 1, 4 butane diol or 1,3 propane diol.

The crystallizable polyesters may be prepared by melt phase polymerization involving the reaction of a diol with a dicarboxylic acid, or its corresponding diester. Various copolymers resulting from use of multiple diols and diacids may also be used. Polymers containing repeating units of only one chemical composition are homopolymers. Polymers with two or more chemically different repeat units in the same macromolecule are termed co polymers. For clarity, a polymer of the terephthalate, isophthalate and 2,6 naphthalate moieties reacted with ethylene glycol, diethylene glycol and cyclohexanedimethanol contains six distinct monomers and is considered a copolymer. The diversity of the repeat units depends on the number of different types of monomers present in the initial polymerization reaction. In the case of polyesters, copolymers include reacting one or more diols with one or more diacids, and are sometimes also referred to as terpolymers. Additionally, randomization of the monomers is not necessary. A copolymer or terpolymer also refers to a polymer with different monomers be they in block or random distribution.

Suitable dicarboxylic acids include those comprising from about 6 to about 40 carbon atoms. Specific dicarboxylic acids include, but are not limited to, terephthalic acid, isophthalic acid, naphthalene 2,6 -dicarboxylic acid, cyclohexanedicarboxylic acid, cyclohexanediacetic acid, diphenyl-4,4'-dicarboxylic acid, 1,3 -phenylenedioxydiacetic acid, 1,2 -phenylenedioxydiacetic acid, 1,4-phenylenedioxydiacetic acid, succinic acid, glutaric acid, adipic acid, azelaic acid,

sebacic acid, and the like. Specific esters include, but are not limited to, phthalic esters and naphthalic diesters.

Also included are the monomers which create polyester ionomers such as metallo -sulfonates. As discussed in more detail below as compatabilizing agents, these ionomer include but are not limited to the sulfonated isophthalate salts of lithium, sodium, zinc, sulfur, and phosphorous.

These acids or esters may be reacted with an aliphatic diol having from about 2 to about 10 carbon atoms, a cycloaliphatic diol having from about 7 to about 14 carbon atoms, an aromatic diol having from about 6 to a bout 15 carbon atoms, or a glycol ether having from 4 to 10 carbon atoms. Suitable diols include, but are not limited to 1,4 -butenediol, trimethylene glycol, 1,6-hexanediol, 1,4-cyclohexanedimethanol, diethylene glycol, resorcinol, and hydroquinone.

Polyfunctional comonomers can also be used, typically in amounts of from about 0.1 to about. 3 mole percent. Suitable comonomers include, but are not limited to, trimellitic anhydride, trimethylopropane, pyromellitic dianhydride (PMDA), and pentaerythritol. Po lyester-forming polyacids or polyols can also be used.

One preferred polyester is polyethylene terephthalate (PET homopolymer) formed from the approximate 1:1 stoichiometric reaction of terephthalic acid, or its ester, with ethylene glycol. Another preferred polyester is polyethylene naphthalate (PEN homopolymer) formed from the approximate 1:1 to 1:1.6 stoichiometric reaction of 2,6 naphthalene dicarboxylic acid, or its ester, with ethylene glycol. Yet another preferred polyester is polybutylene terephth alate (PBT). PET copolymers, PEN copolymers, and PBT copolymers are also preferred. Specific co- and ter- polymers of interest are PET with combinations of moieties derived from isophthalic acid or its diester, 2,6 naphthalene dicarboxylic acid or its diester, and/or cyclohexane dimethanol. These mole ratios would be the 98:2:98:2 terephthalate: isophthalate: ethylene glycol: diethylene glycol is a preferred crystallizable polyester for this invention.

The esterification or polycondensation reaction of the carboxylic acid or ester with ethylene glycol typically takes place in the presence of a catalyst. Suitable catalysts include, but are not limited to, antimony oxide, antimony triacetates antimony ethylene glycolate, organo - magnesium, tin oxide, titan ium alkoxides, dibutyl tin dilaurate, and germanium oxide. These catalysts may be used in combination with zinc, manganese, or magnesium acetates or benzoates. Catalysts comprising antimony are preferred.

It is specifically contemplated that the crystallizable polyester have an I.V. prior to solid phase polymerization of between 0.2 and 0.95 dl/g. For example one could use a film forming crystallizable polyester of at least 0.45 dl/g, an intermediate feed I.V. of 0.49 to 0.59 dl/g, more preferably 0.52 to 0.56 dl/g. The pellet could also comprise a crystallizable polyester bottle resin of feed I.V. ranging from 0.59 to 0.75 dl/g, more preferably 0.61 to 0.64 dl/g. It is noted that while the measured I.V. of a polymer is a single value, that value represents the composite of the various molecule chain lengths. The typical I.V. increase during solid phase polymerization is at least 0.04 dl/g, but can be as high 0.2 or even as high as 0.4 dl/g.

Polytrimethylene terephthalate (PTT) is another preferred crystallizable polyester. It can be prepared by, for example, reacting 1, 3 -propanediol with at least one aromatic diacid or alkyl ester thereof. Preferred diacids and alkyl esters include terephthalic acid (TPA) or dimethyl terephthalate (DMT). Accordingly, the PTT preferably has at least about 85 mole percent of its acid moieties derived from TPA or DMT. Other diols which may be copolymerized in such a polyester include, for example, ethylene glycol, diethylene glycol, 1,4 -cyclohexane dimethanol, and 1,4-butanediol. Isophthalic acid and sebacic acid are examples of aromatic and aliphatic acids that may be used simultaneously to make a copolymer.

Preferred catalysts for preparing PTT include titanium and zirconium compounds. Suitable catalytic titanium compounds include, but are not limited to, titanium alkylates and their derivative, titanium complex salts , titanium complexes with hydroxycarboxylic acids, titanium dioxide-silicon dioxide-co-precipitates, and hydrated alkaline -containing titanium dioxide. Specific examples include tetra -(2-ethylhexyl)-titanate, tetrastearyl titanate, diisopropoxy - bis(acetylacetonato)-titanium, di -n-butoxy-bis(triethanolaminato) -titanium, tributylmonoacetyltitanate, triisopropyl monoacetyltitanate, tetrabenzoic acid ti tanate, alkali titanium oxalates and malonates, potassium hexafluorotitanate, and titanium complexes with tartaric acid, citric acid or lactic acid. Preferred catalytic titanium compounds are titanium tetrabutylate and titanium tetraisopropylate. The corresponding zirconium compounds may also be used.

The preferred polyester of this invention may also contain small amounts of phosphorous compounds, such as phosphates, and a catalyst such as a cobalt compound, that tends to impart a blue hue. Other agents that may be included are infrared absorbers such as carbon black, graphite, and various iron compounds. The polyester may also be void of cobalt.

The melt phase polymerization described above may be followed by a crystallization step and then a solid ph ase polymerization (SSP) step to increase the molecular weight, as measured by Intrinsic Viscosity, necessary for bottle manufacture. The crystallization and polymerization can be performed in a tumbler dryer reaction in a batch -type system. Alternatively, the crystallization and polymerization can be accomplished in a continuous solid phase process whereby the polymer flows from one vessel to another after its predetermined thermal treatment in each vessel.

The crystallization conditions for PET preferably include a temperature of from about 100°C to about 150°C. Typical thermal processing operations for crystallizing PET increase the crystallinity of the PET in the pellet by at least

5 percent.

The solid phase polymerization conditions preferably include a temperature of from about 200°C to about 1°C less than the melting point of the crystallized polyester. For commercial crystallizable polyesters which melt at 242 - 248°C, it is preferred to operate in the range of 200°C to about 235°C, and more preferably from about 215°C to about 235°C. The solid phase polymerization is carried out for a time sufficient to raise the molecular weight to the desired level, which will depend upon the application and initial intrinsic viscosity. For a typical bottle application, the preferred molecular weight corresponds to an intrinsic viscosity from about 0.54 to about 0.88 deciliter/gram, as determined by the methods described in the methods section. The time required to reach this molecular weight may range fr om about 8 to about 45 hours. Typical inc reases in I.V. are at least 0.04 dl/g, with increases in the range of 0.2 to 0.4 dl/g being more typical.

In one embodiment of the invention, the thermoplastic polymer matrix of the present invention may comprise recycled polyester or materials derived from recycled polyester, such as polyester monomers, catalysts, and oligomers.

The polyester-polyamide composition may also include a compatibilizer which increases the dispersion of the polyamide into the polyes ter. Examples of such compatibilizers are found in United States Patent Application 2 004/0013833 A1, the teachings of which are incorporated in their entirety, describes isophthalic acid (IPA)-modified PET and PET ionomers as compatibilizers.

The preferred compatibilizer of United States Patent Application 2004/0013833 A1 is an ionic compatibilizer, preferably a copolyester, containing a metal sulfonate salt group. The metal ion of the sulfonate salt may be Na+, Li+, K+, Zn++, Mn++, and Ca++. While the sulfonate salt group is often attached to an aromatic nucleus such as a benzene, naphthalene, diphenyl, oxydiphenyl, sulfonyldipheny 1, or methylenediphenyl nucleus, it can equally be attached to a non-aromatic nucleus such as sulfonated polystyrene.

Preferably, the aromatic acid nucleus is sulfoisophthalic acid, sulfoterephthalic acid, sulfoisophthalic acid, 4-sulfonaphthalene, 2,7 dicarboxylic acid, and their esters. The preferred range of the ionic compatibilizer is 0.05 to 2.0 mole percent by weight of the respective acid or glycol moiety.

The compatibilizer may exist as a third component in the composition or alternatively, the ionic compatibilizer can be polymerized into the molecular chain of the polyester or polyamide resin. If the compatibilizer is copolymerized into the polyester matrix, the moles of ionic compatibilizer are included in the total moles the acid and the glycol. For example, copolymerizing 0.5 moles of lithium sulfoisophthalic acid into the polyester molecule would mean there were 99.5 moles of terephthalic acid, 0.5 moles of lithium sulfoisophthalic acid and 98 moles of ethylene glycol and 2 moles of diethylene glycol for every 200 moles of total monomers in the polymer.

United States Patent 3,328,484 describes incorporating the ionomers into polyamides.

To minimize color formation during solid phase polymerization, the compartmentalized pellet taught by WO 2005/110694 A1 , the teachings of which are incorporated in their entir ety should be used and is therefore the preferred structure. A special embodiment of is an inner compartment surrounded by an outer compartment, wherein the polyamide with low triamine content is in the core It should be understood that in such an embodi ment, the temperature exposure may melt or liquefy the material in the encapsulated core without melting the skin surrounding the core. This pellet with a liquefied inner compartment and solid skin is not considered a liquid pellet.

United States Patents 5,627,218 and 5,747,548 discloses many techniques for manufacturing compartmentalized pellets. In one embodiment, there are at least two zones, or regions in the pellet, preferably a c ore and a sheath. Unless otherwise noted, the core-sheath with the sealed ends, as taught by United States Patent 6,669,986 is the preferred pellet structure.

The core-sheath structure is ob tained using two extruders. If a third material in another zone is desired, an additional extruder is required. The first extruder supplies the liquid feed forming the core material which is linearly extruded at the center of the strand. A t the same time, the sheath material is extruded in the second extruder into the sheath layer which concentrically covers the core. United States Patent 6,669,986 discloses a multiple hole die apparatus to manufacture a core -sheath pellet. Fig - 1 depicts the core-sheath compartmentalized pellet having a core 1 which is substantially covered by a sheath 2 . In the preferred embodiment, the polyester is extruded into the outer sheath 2 and the polyamide with low triamine content (preferably MXD6) extruded into the core 1. It is apparent to one skilled in the art that the strand could consist of more than two an nular concentric layers, such as Fig-4. This could be accomplished by using another extruder and different die.

The first step is to extrude a multilayer strand. One component is extruded in the center of the pellet and the other component is extruded around the center component. The extruded multilayer strand is cut by a pelletizer before or after it is cooled , as required, and formed into multilayer pellets.

The strand is then cooled by conventional methods. For example, the strand can be immersed in a water tank with cool water. The water-cooled multilayer strand is preferably sent to the pelletizer after removing surface moisture, often done by a spin dryer.

The pelletizer cuts the multilayer strand into a specified length by driving a rotary knife, or the like. By cutting the multilayer strand as it is, double columnar form multilayer pellets comprising the core material and the sheath material

are ob tained.

In general, multilayer or compartmentalized pellets with an outside diameter of about 2 to 8 mm are manufactured. The present invention is also not limited to pellets made from strands. For example, as revealed in United States Patent 5,627,218 , the thermoplastic polymers can be cast into layered sheets that are then cut in a cube form as well. The minimum structure is two layers, but the preferred structure for a cast structure of this invention is depicted in Fig - 3. In the sandwich or laye red construction there are at least three layers wherein the middle layer 33 is sandwiched between a first outer layer 31 and a second outer layer 32.

The compartmentalized zones can be classified as a first compartmentalized zone, a second compartmentalized zone, and sequentially labeled with each increasing zone number. For instance, a core-sheath design has a minimum of two compartmentalized zones. The core sheath design could have more zones depending upon the number of concentric rings.

The size of the compartmentalized zone distinguishes it from a zone associated with a homogenous dispersion. The homogenous dispersion creates zones, but they are finely divided with each zone representing a very small percentage of the total volume of the pellet. The compartmentalized zone will be a much greater percentage of the total volume.

To be a compartmentalized zone, the volume of the zone must be at least 0.001 percent of the total volume of the pellet. In practicality, 0.01 volume percent is more preferred, with at least 0.1 volume percent the most preferred.

This is easily demonstrated using the core sheath shown in Figure 1. The percentage of the volume of the compartmentalized zone (core) relative to the whole pellet is the ratio of the radius of the core squared to the radius of the cylindrical portion of the pellet squared.

A preferred embodiment is the core-sheath design wherein the core comprises m-xylylene adipamide polyamide (MXD6) with a number average molecular weight between 4000 and 50,000 and triamine content after hydrolysis less 0.20 and the sheath comprises a polyester, specifically crystallizable polyethylene terephthalate with an Intrinsic Viscosity (I.V.) between 0.4 and 1.2 dl/g. The phrase crystallizable polyethylene terephthal ate, crystallizable polyethylene terephthalates both refer to the group of crystallizable polyesters that have at least 85% of the acid moieties derived from terephthalic acid or the dimethyl ester of terephthalic acid or their equivalents. Thus, a polyester made by reacting ethylene glycol with 2 mole percent isophthalic acid and 98 mole percent terephthalic acid is a crystallizable polyethylene terephthalate.

Once the pellet is made, both materials can then be further processed under standard conditions of crystallization and solid phase polymerized without generating gels.

The article of the invention is indifferent as to whether the materials are crystalline or amorphous. For example, a pellet with a sheath of a 0.49 I.V. amorphous crystallizable polyethylene terephthalate encapsulating a core comprising MXD6 nylon with number average molecular weight 6,000 and a triamine content less than 0.22 prior to crystallization is one of the embodiments of the article. That same pellet after crystallization is one of the embodiments, as is the same pellet which has been solid phase polymerized and the crystallizable polyethylene terephthalate I.V. is 0.84 and the number average molecular weight of the MXD6 nylon has also increased.

Another preferred embodiment, as depicted in Fig - 2, is to close the ends of the pellet so the inner core 21 is completely surrounded and enclosed by a sheath 21. One way to make a pellet with an outer layer sheath that encloses the contents of the inner layer (s) is to cut the pellet strand next to the die underwater. The preferred pellet structure is an MXD6 core with triamine content after hydrolysis less than 0.20 surrounded by a polyester copolymer.

It needs to be recognized that absolute separation of the compartmentalized zones is not essential. Even though the materials may be in separate zones, there may be some polyamide (MXD6) in the polyester zone and some polyester in the polyamide (MXD6) zone.

It is specifically contemplated that the polyamide zone contain the same crystallizable polyester found in the crystallalizble polyester zone.

WO 2005/110694 A1 notes voids may form in the pellet at high strand production speeds and lists specific techniques to reduce voi ds. The preferred way to elimina te voids is to put the PET ionomer in the polyester. This can be done by using a third PET ionomer or incorporating the ionomeric species, e.g. lithium sulfoisophthalate into the chain of the crystallizable polyester. -

Experimental Results

The ability of the low triamine content to prevent the formation of gels at aggressive conditions is demonstrated in the following series of experiments.

The series in Table I demonstrate the role of the triamine in forming gels. Various MXD6 polyamides having the end groups, relative viscosities, and triamine contents are listed in Table I. These pellets were then heated to 230°C and maintained at that temperature for 14 hours under nitrogen.

The polyamides were analyzed for gels by adding 0.1 gm of the thermally tr eated polyamide to 25 mls of a 1:

1 mixture of trifluoroacetic acid (TFA) and $CH_2Cl_2$. Complete dissolution indicated no gels. The presence of gels was indicated by insolubles.

The polyamides were also analyzed for final Relative Viscosity. As is easily seen, the high triamine content had gels, the low triamine content materials did not gel. Those polymers with a large imbalance of end groups did not experience as large an increase in Relative Viscosity as did the polymers with more balanced end groups.

TABLE I POLYAMIDE PELLETS

| | Example | 1 | 2 | 3 | 4 | 5 | 6 | 7 | 8 |
|---|---|---|---|---|---|---|---|---|---|
| BEFORE SSP | | | | | | | | | |
| | Amino End Groups (mmol/kmol) | 199 | 7 | 9 | 9 | 11 | 9 | 36 | 20 |
| | Carboxyl (Acid) End Groups (mmol/ kmol) | 33 | 255 | 228 | 161 | 197 | 133 | 79 | 65 |
| | Relative Viscosity | 1.650 | 1.572 | 1.599 | 1.845 | 1.702 | 1.99 | 2.05 | 2.65 |
| | Triamine content after Hydrolysis (%) | 0.40 | 0.09 | 0.11 | 0.08 | 0.16 | 0.09 | | 0.10 |
| AFTER SSP | | | | | | | | | |
| | Relative Viscosity After Thermal Treatment | | 1.845 | 1.792 | 2.113 | 1.891 | 2.39 | 3.52 | |
| | Gels | Yes | No | No | No | No | No | No | No |
| | Increase in Relative Viscosity | | 0.273 | 0.193 | 0.268 | 0.189 | 0.40 | 1.47 | |

Table II demonstrates the utility of these polymers in the compartmentalized pellet. In Experiments 9-11, the polyamide s with the indicated attributes were placed into the core of a compartmentalized pellet surround by the sheath of a cryst allizable polyester. The pellets were then exposed to the solid phase polymerization for the indicated temperature and time. In all cases, the triamine content was high enough to cause gels.

In Experiments 12, 13, and 14, the polyamide of the indicate d attributes was placed into the core of a compartmentalized pellet, with the sheath of crystallizable polyester. The pellets were then exposed to polyester solid phase polymerization conditions indicated. As can be seen, the polyester increased in I.V. while the polyamide showed no increase in molecular weight as measured by Relative Viscosity or End Group analysis and no gels were evident. It should be noted that the polyesters used in the sheath contained 0.5 mole percent lithium sulfoisophthalic acid. In Experiment 14, possible gels were observed, therefore deserving a rating of "slight". However, there was no indication of gels in the bottle sidewall, which should have been evident as haze.

In experiment 15 and 16, the polyamide of the indicate d attributes were melt blended with a crystallizable polyester and then solid phase polymerized at the conditions indicated. No gels were observed. It should be noted that the main difference between 14 and 15 is that the crystallizable polyester of 15 contained 0.5 mole percent of its acid units derived from lithium sulfoisophthalic acid.

TABLE II Pellets With Polyester and Polyamide

| | Experiment Number | 9 | 10 | 11 | 12 | 13 | 14 | 15 | 16 |
|---|---|---|---|---|---|---|---|---|---|
| | Pellet Construction C-S= Core-Sheath M-B = Melt Blend | C-S | C-S | C-S | C-S | C-S | C-S | M-B | M-B |
| | Amount of MXD6 (wt%) | 5 | 5 | 5 | 4.7* | 5.40 | 5 | 5* | 5* |
| | | | | | | | | | |
| BEFORE SSP | | | | | | | | | |
| | Amino End Groups (mmol/ kmol) | 186 | 31 | 15 | 16 | 10 | 13 | 16 | 16 |
| | Carboxyl (Acid) End Groups (mmol/kmol) | 16 | 83 | 73 | 172 | 221 | 89 | 172 | 172 |
| | Mn based on Total End Groups | 9901 | 17543 | 22727 | 10638 | 8658 | 19607 | 10638 | 10638 |

(continued)

| | | | | | | | | | |
|---|---|---|---|---|---|---|---|---|---|
| BEFORE SSP | | | | | | | | | |
| | Relative Viscosity | 1.75 | 2.45 | 2.86 | 1.79 | 1.6 | 2.428 | 1.79 | 1.79 |
| | Triamine Content wt% | 0.71 | 0.67 | 0.62 | 0.19 | 0.11 | 0.22 | 0.19 | 0.19 |
| | | | | | | | | | |
| AFTER SSP | | | | | | | | | |
| | Amino End Groups (mmol/ kmol) | | | | 12 | 9 | | | |
| | Carboxyl (Acid) End Groups (mmol/kmol) | | | | 171 | 228 | | | |
| | Mn based on Total End Groups | | | | 10929 | 8439 | | | |
| | Relative Viscosity | | | | 1.82 | 1.59 | | | |
| | Gels | Small | Large | Large | None | None | Slight | None | None |
| | | | | | | | | | |
| Solid Phase Polymerization Conditions | | | | | | | | | |
| | (hrs) | 14 | 14 | 14 | | 10-11 | 10 | 12 | 7 |
| | Time Temperature (°C) | 210 | 210 | 210 | | 212 | 212 | 210 | 210 |
| * Contained 250ppm of Sodium Hypophosphite stabilizer as well | | | | | | | | | |

Test Methods

Intrinsic Viscosity

The intrinsic viscosity of intermediate molecular weight and low crystalline poly(ethylene terephthalate) and related polymer s which are soluble in 60/40 phenol/tetrachloroethane can be determined by dissolving 0.1 gms of polymer or ground pellet into 25 ml of 60/40 phenol/tetrachloroethane solution and determining the viscosity of the solution at 30 °C +/ - 0.05 relative to the solvent at the same temperature using a Ubbelohde 1B viscometer. The intrinsic viscosity is calculated using the Billmeyer equation based upon the relative viscosity.

The intrinsic viscosity of high molecular weight or highly crystalline poly(ethylene terephthalate) and related polymers which are not soluble in phenol/tetrachloroethane was determined by dissolving 0.1 gms of polymer or ground pellet into 25 ml of 50/50 trifluoroacetic Acid/Dichloromethane and determining the viscosity of the solution at 3 0 °C +/- 0.05 relative to the solvent at the same temperature using a Type OC U bbelohde viscometer. The intrinsic viscosity is calculated using the Billmeyer equation and converted using a linear regression to obtain results which are consistent with those obtained using 60/40 phenol/tetrachloroethane solvent. The linear regression is

$$\text{I.V. in 60/40 phenol/tetrachloroethane} = 0.8229 \times \text{IV in 50/50 trifluoroacetic Acid/Dichloromethane} + 0.0124$$

Crystallinity Determinations.

For pellets containing multiple compounds in either method, the measured density or the required amounts of heat (DSC technique) are adjusted by the weighted average of the amount of the compound in the pellet.

Component Separation and Determination of the Component s in the Compartmentalized Pellet

The amount of each component in the pellet can be determined by many different techniques. For example, one can know how much of the compound was added when manufacturing the pellet, one can physically separate the

components, or one can se parate the components by dissolving the components away from each other, removing the solvent and taking the weight. In the case of polyamide -PET, formic acid can be used to dissolve the polyamide out of the core, leaving the PET sheath. The amount of PE T can be directly weighed and the polyamide amount determined by difference. If the polyamide core contains other compounds which are not soluble in formic acid, the solution can be filtered and the polyamide precipitated from the formic acid by adding water. The sample is then dried and the amount of polyamide determined by direct weighing. In any case, small amounts of additives or other non - polyamide, non-PET materials would not affect the absolute value of the crystallinity to any great extent.

Once separated from the pellet, the individual crystallinity or intrinsic viscosity of the component can be determined. This invention is illustrated by the following examples that are merely for the purpose of illustration and are not to be regarded as limit ing the scope of the invention or the manner in which it can be practiced. Unless specifically indicated otherwise, parts and percentages are given by weight.

End Group Analysis

The polyamide contains an acid end group and an amino end group. The shorth and often expressed as AEG = amino end group content, CEG = carboxylic (or acid) end group content.

The employed concentrations are defined as amount of end groups (in mol) per mass unit polyamide, for example X mmol end groups per kg polyamide. The co nversion to different units of expression is well known in the art. For the purposes of calculating the ratio it is only important that both terms be expressed in the same units.

The measurement of the amino end groups (AEG) can be performed by titration of a solution of the polyamide in presence of an indicator. The polyamide is dissolved by warming a mixture of phenol and methanol (e.g. 75 w.% phenol and 25 w.% methanol). The known amount of polyamide is added to the solution and held until it is dissolved. Many variations exist, for example, the mixture can be kept under reflux until a homogeneous solution is obtained.

A suitable indicator or indicator mixture (e.g. methanolic solution of benzylorange or methylene blue) is added to the chilled solut ion. This mixture is titrated with a methanol containing perchloric acid solution in ethylene glycol, until color changes. The amino end group concentration can be calculated from the consumption of the perchloric acid.

Alternatively, the titration can also be performed potentiometrically with a perchloric acid solution in ethylene glycol, This type of analysis is done with a titro -processor (Messrs. Metrohm) as follows. 1 kg phenol is mixed with 429 g of methanol p.a. and slightly warmed. To 50 ml of sai d solution is added 1 g of polymer granulate and under reverse flow warmed for 20 minutes until the solution reaches 90°C. The solution is titrated with a 0.1 N solution of perchloric acid in ethylene -glycol.

The measurement of the carboxylic end groups can also be carried out by titration of a solution of the polyamide by usage of an indicator as well. The polyamide is dissolved in benzyl alcohol (phenylmethanol) by warming, e.g. boiling under nitrogen flush.

A suitable indicator or indicator mixture (e.g. propanolic solution of cresol red) is added to the hot solution. This solution is immediately titrated with an alcoholic potassium hydroxide solution (KOH dissolved in a mixture of methanol, 1-propanol and 1-hexanol), until color changes. The carboxy lic end group concentration can be calculated from the consumption of the potassium hydroxide.

Alternatively, the titration can also be performed conductrometrically with a NaOH - solution in benzyl alcohol by mixing 1 g of polymer granulate with 50 ml of benzyl alcohol and heated for 30 minutes at 180°C under reverse flow. A constant stream of nitrogen is passed through. Upon complete dissolution of the polymer, titration is done with 0.1 N of benzyl -alcoholic soda lye.

Relative Viscosity

The relative viscosity of the polyamide, including MXD6, was measured with samples of 1 g polyamide in 100 ml 96 w.% sulphuric acid by using a Ubbelohde viscometer 2 Typ e 50120 (Schott) according to DIN EN ISO 1628 -1 and ISO 307 - 1984.

Triamine Content After Hydrolysis

The triamine content after hydrolysis is measured after complete hydrolysis of the polyamide by using capillary electrophoresis combined with UV detection. The quantification is effected by the method of the internal standard, N-methyl-imidazole

The polyamide is hydrolyzed by heating 200 mg of the polyamide in 15 ml 1N sulphuric acid in an autoclave at 180°C for 4 hours. 0.5 ml of the hydrolyzed solution is mixed with 1 ml solution of the internal standard. The sulphate is then precipitated as $BaSO_4$ by adding cold saturated $Ba(OH)_2$ until reaching a pH of 6 as measured by a standard pH electrode. The residual solution is diluted with water to a volume of 50 ml.

Aliquots of the residual solution were analyzed by electrophoresis. For the electrophore sis a compact system (Biofocus from Bio-Rad, Munich German), capillaries (fused silica, not coated) and an electronic integrator were used.

Electrophoresis conditions:

Capillary (fused, silica, not coated): total length: 40 cm; separation length: 35.5 cm, inner diameter: 75 μm;
Cathode electrolyte: 20 mM $NaH_2PO_4$ (pH is set to 2.5 by $H_3PO_4$)
Anode electrolyte: 20 mM $NaH_2PO_4$ (pH is set to 2.5 by $H_3PO_4$)
Separation voltage; + 15 kV / + 375 V/cm
Temperature: 25 °C
Detection: UV/λ = 200 nm;

## Claims

1. A resin composition comprising a polyester selected from the group consisting of crystallizable polyesters that have at least 85% of the crystallizable polyester acid moieties derived from the group consisting of terephthalic acid, 2,6 naphthalene dicarboxylic acid and their diesters and a polyamide comprising a residue selected from the group consisting of the repeating unit of amino caproic acid and the repeating unit of A -D, wherein A is the residue of a dicarboxylic acid comprising adipic acid, isophthalic acid, terephthalic acid, 1,4-cyclohexanedicarboxylic acid, or naphthalenedicarboxylic acid, or a mixture thereof, and D is a residue of a diamine comprising m -xylylene diamine, p -xylylene diamine, hexamethylene diamine, ethylene diamine, or 1,4 cyclohexanedimethylamine, or a mixture thereof, wherein the polyamide has a triamine content less than 0.22 weight percent after hydrolysis and a carboxyl content of outside the range of 20 to 80 percent of the total number of end groups.

2. The resin composition of claim 1, wherein at least 90% of the crystallizable polyester's acid moieties are derived from terephthalic acid and at least 90% of the crystallizable polyester's glycol moieties are derived from ethylene glycol.

3. The resin composition of claim 2, wherein the polya mide is MXD6 nylon.

4. Any composition according to any one of claims 1 through 3, wherein the composition exists as a resin pellet with the polyamide dispersed into the polyester.

5. A composition according to any one of claims 1 through 3, wherein the composition exists as a compartmentalized pellet comprising a first compartmentalized zone and a second compartmentalized zone, wherein the first compartmentalized zone is comprised of the polyester and the second compartmentalized zone is comprised of the polyamide.

6. A process for solid phase polymerizing a polyester and polyamide at the same temperature for the same amount of time comprising the steps of

   A) Selecting a polyester from the group consisting of crystallizable polyesters that have at least 85% of the crystallizable polyester acid moieties derived from the group consisting of terephthalic acid, 2,6 naphthalene dicarboxylic acid and their diesters and a polyamide comprising a residue selected from the group consisting of the repeating unit of a mino caproic acid and the repeating unit of A-D, wherein A is the residue of a dicarboxylic acid comprising adipic acid, isophthalic acid, terephthalic acid, 1,4 -cyclohexanedicarboxylic acid, or naphthalenedicarboxylic acid, or a mixture thereof, and D is a residue of a diamine comprising m -xylylene diamine, p-xylylene diamine, hexamethylene diamine, ethylene diamine, or 1,4 cyclohexanedimethylamine, or a mixture thereof, wherein the polyamide has a triamine content less than 0.22 weight percent after hydro lysis and a carboxyl content outside the range of 20 to 80 percent of the total number of end groups;
   B) Combining the polyester and polyamide into resin pellets so that the resin pellets comprise both the polyester and polyamide;
   C) Heating the resin pell ets to a temperature in the range 40 °C to 1°C below which the pellets becomes liquid; and
   D) Maintaining the resin pellets in the temperature range for sufficient time to increase the intrinsic viscosity of the polyester by at least 0.05 dl/g.

7. The process of claim 6, wherein at least 90% of the crystallizable polyester's acid moieties are derived from terephthalic acid and 90% of the crystallizable polyester's glycol moieties are derived from ethylene glycol.

8. The process of claim 6, wherein the polyamide is MXD6 nylon.

9. The process according to any one of claims 6 through 8, wherein the polyester and polyamide are combined into the pellets so that the polyamide is dispersed into the polyester.

10. The process according to any one of claims 6 th rough 8, wherein the polyester and polyamide are combined into compartmentalized pellets comprising a first compartmentalized zone and a second compartmentalized zone, wherein the first compartmentalized zone is comprised of the polyester and the second co mpartmentalized zone is comprised of the polyamide.

11. The process of claim 7, wherein the resin pellets are heated to a temperature in the range of 165°C and 235°C.

12. The process of claim 6, wherein at least 90% of the crystallizable polyester's acid moieties are derived from terephthalic acid and at least 90% of crystallizable polyester's glycol moieties are derived from ethylene glycol.

13. The process of claim 11, wherein the polyamide is MXD6 nylon.

14. The process according to any one of any of claims 12 through 13, wherein the polyester and polyamide are combined into the pellet so that the polyamide is dispersed into the polyester.

15. The process according to any one of any of claims 12 through 13, wherein the polyester and polyamide are com bined into compartmentalized pellets comprising a first compartmentalized zone and a second compartmentalized zone, wherein the first compartmentalized zone is comprised of the polyester and the second compartmentalized zone is comprised of the polyamide.

16. The process of claim 6, wherein the crystallizable polyester comprises lithium sulfoisophthalate.

**Patentansprüche**

1. Harz-Zusammensetzung, umfassend einen Polyester ausgewählt aus der Gruppe bestehend aus kristallisierbaren Polyestern, die mindestens 85% der kristallisierbaren Polyester-Säurereste, die aus der Gruppe bestehend aus Terephthalsäure, 2,6-Naphthalindicarbonsäure und ihrer Diester abgeleitet sind, haben, und ein Polyamid, das einen Rest ausgewählt aus der Gruppe bestehend aus der Wiederholungseinheit von Aminocapronsäure und aus der Wiederholungseinheit von A-D umfasst, worin A der Rest einer Dicarbonsäure ist, umfassend Adipinsäure, Isophthal-Säure, Terephthalsäure, 1,4-Cyclohexandicarbonsäure oder Naphthalindicarbonsäure oder eine Mischung davon, und D ein Rest eines Diamins ist, umfassend m-Xylylendiamin, p-Xylylendiamin, Hexamethylendiamin, Ethylendiamin oder 1,4-Cyclohexandimethylamin oder eine Mischung davon, worin das Polyamid einen Triamingehalt von weniger als 0,22 Gewichtsprozent nach der Hydrolyse und einen Carboxyl-Gehalt außerhalb des Bereichs von 20 bis 80 Prozent der Gesamtzahl an Endgruppen hat.

2. Harz-Zusammensetzung nach Anspruch 1, worin mindestens 90% der kristallisierbaren Säurereste des Polyesters von Terephthalsäure abgeleitet sind und mindestens 90% der kristallisierbaren Glykolreste des Polyesters von Ethylenglykol abgeleitet sind.

3. Harz-Zusammensetzung nach Anspruch 2, worin das Polyamid Nylon-MXD6 ist.

4. Zusammensetzung nach einem der Ansprüche 1 bis 3, worin die Zusammensetzung als Harzpellet vorhanden ist, wobei das Polyamid in den Polyester dispergiert ist.

5. Zusammensetzung nach einem der Ansprüche 1 bis 3, worin die Zusammensetzung als kompartimentalisiertes Pellet vorhanden ist, das eine erste kompartimentalisierte Zone und eine zweite kompartimentalisierte Zone umfasst, worin die erste kompartimentalisierte Zone den Polyester und die zweite kompartimentalisierte Zone das Polyamid umfasst.

**6.** Verfahren zur Festphasenpolymerisation eines Polyesters und eines Polyamids bei der gleichen Temperatur für den gleichen Zeitraum, umfassend die Schritte:

A) Auswählen eines Polyesters aus der Gruppe bestehend aus kristallisierbaren Polyestern, die mindestens 85% der kristallisierbaren Polyester-Säurereste, die aus der Gruppe bestehend aus Terephthalsäure, 2,6-Naphthalindicarbonsäure und ihrer Diester abgeleitet sind, haben, und eines Polyamids, das einen Rest ausgewählt aus der Gruppe bestehend aus der Wiederholungseinheit von Aminocapronsäure und aus der Wiederholungseinheit von A-D umfasst, worin A der Rest einer Dicarbonsäure ist, umfassend Adipinsäure, Isophthal-Säure, Terephthalsäure, 1,4-Cyclohexandicarbonsäure oder Naphthalindicarbonsäure oder eine Mischung davon, und D ein Rest eines Diamins ist, umfassend m-Xylylendiamin, p-Xylylendiamin, Hexamethylendiamin, Ethylendiamin oder 1,4-Cyclohexandimethylamin oder eine Mischung davon, worin das Polyamid einen Triamingehalt von weniger als 0,22 Gewichtsprozent nach der Hydrolyse und einen Carboxyl-Gehalt außerhalb des Bereichs von 20 bis 80 Prozent der Gesamtzahl an Endgruppen hat;
B) Zusammenschluss des Polyesters und des Polyamids in Harzpellets, so dass die Harzpellets sowohl den Polyester als auch das Polyamid umfassen;
C) Erhitzen der Harzpellets auf eine Temperatur im Bereich von 40°C bis 1 °C, unterhalb der die Pellets flüssig werden; und
D) Halten der Harzpellets im Temperaturbereich für einen ausreichenden Zeitraum, um die innere Viskosität des Polyesters um mindestens 0,05 dl/g zu erhöhen.

**7.** Verfahren nach Anspruch 6, worin mindestens 90% der kristallisierbaren Säurereste des Polyesters von Terephthalsäure und 90% der kristallisierbaren Glykolreste des Polyesters von Ethylenglykol abgeleitet sind.

**8.** Verfahren nach Anspruch 6, worin das Polyamid Nylon-MXD6 ist.

**9.** Verfahren nach einem der Ansprüche 6 bis 8, worin der Polyester und das Polyamid in den Pellets kombiniert werden, so dass das Polyamid in den Polyester dispergiert ist.

**10.** Verfahren nach einem der Ansprüche 6 bis 8, worin der Polyester und das Polyamid in den kompartimentalisierten Pellets kombiniert werden, umfassend eine erste kompartimentalisierte Zone und eine zweite kompartimentalisierte Zone, worin die erste kompartimentalisierte Zone den Polyester und die zweite kompartimentalisierte Zone das Polyamid umfasst.

**11.** Verfahren nach Anspruch 7, worin die Harzpellets auf eine Temperatur im Bereich von 165°C und 235°C erhitzt werden.

**12.** Verfahren nach Anspruch 6, worin mindestens 90% der kristallisierbaren Säurereste des Polyesters von Terephthalsäure und mindestens 90% der Glykolreste des kristallisierbaren Polyesters von Ethylenglykol abgeleitet sind.

**13.** Verfahren nach Anspruch 11, worin das Polyamid Nylon-MXD6 ist.

**14.** Verfahren nach einem der Ansprüche 12 bis 13, worin der Polyester und das Polyamid in dem Pellet kombiniert werden, so dass das Polyamid in den Polyester dispergiert ist.

**15.** Verfahren nach einem der Ansprüche 12 bis 13, worin der Polyester und das Polyamid in den kompartimentalisierten Pellets kombiniert werden, umfassend eine erste kompartimentalisierte Zone und eine zweite kompartimentalisierte Zone, worin die erste kompartimentalisierte Zone den Polyester und die zweite kompartimentalisierte Zone das Polyamid umfasst.

**16.** Verfahren nach Anspruch 6, worin der kristallisierbare Polyester Lithiumsulfoisophthalat umfasst.

## Revendications

**1.** Composition de résine comprenant un polyester choisi dans le groupe constitué de polyesters pouvant être cristallisés, dont au moins 85 % des radicaux acides de polyesters pouvant être cristallisés proviennent du groupe constitué de l'acide téréphtalique, de l'acide 2,6-naphtalène-dicarboxylique et de leurs diesters, et un polyamide comprenant un résidu choisi dans le groupe constitué de l'unité répétée acide aminocaproïque et de l'unité répétée A-D, dans

laquelle A représente le résidu d'un acide dicarboxylique comprenant l'acide adipique, l'acide isophtalique, l'acide téréphtalique, l'acide 1,4-cyclohexanedicarboxylique ou l'acide naphtalènedicarboxylique ou l'un de leurs mélanges, et D représente un résidu d'une diamine comprenant la m-xylylènediamine, la p-xylylènediamine, l'hexaméthylènediamine, l'éthylènediamine ou la 1,4-cyclohexanediméthylamine ou l'un de leurs mélanges, dans laquelle le polyamide présente une teneur en triamine inférieure à 0,22 pour-cent en poids après hydrolyse et une teneur en carboxyle en dehors de la plage de 20 à 80 pour-cent par rapport au nombre total de groupements terminaux.

**2.** Composition de résine selon la revendication 1, dans laquelle au moins 90 % des radicaux acides du polyester pouvant être cristallisé, sont dérivés de l'acide téréphtalique et au moins 90 % des radicaux de glycol du polyester pouvant être cristallisé sont dérivés de l'éthylèneglycol.

**3.** Composition de résine selon la revendication 2, dans laquelle le polyamide est le Nylon MXD6.

**4.** Composition quelconque selon l'une quelconque des revendications 1 à 3, dans laquelle la composition existe sous la forme d'un granulé de résine, le polyamide étant dispersé dans le polyester.

**5.** Composition selon l'une quelconque des revendications 1 à 3, dans laquelle la composition existe sous la forme d'un granulé compartimenté comprenant une première zone compartimentée et une seconde zone compartimentée, la première zone compartimentée étant constituée du polyester et la seconde zone compartimentée étant constituée du polyamide.

**6.** Procédé de polymérisation en phase solide d'un polyester et d'un polyamide à la même température sur la même période de temps, comprenant les étapes consistant à :

A) sélectionner un polyester dans le groupe constitué de polyesters pouvant être cristallisés, dont au moins 85 % des radicaux acides du polyester pouvant être cristallisé sont dérivés du groupe constitué de l'acide téréphtalique, de l'acide de 2,6-naphtalène-dicarboxylique et de leurs diesters, et un polyamide comprenant un résidu choisi dans le groupe constitué de l'unité répétée acide aminocaproïque et de l'unité répétée A-D, dans laquelle A représente le résidu d'un acide dicarboxylique comprenant l'acide adipique, l'acide isophtalique, l'acide téréphtalique, l'acide 1,4-cyclohexanedicarboxylique ou l'acide naphtalènedicarboxylique ou l'un de leurs mélanges, et D représente un résidu d'une diamine comprenant la m-xylylènediamine, la p-xylylènediamine, l'hexaméthylènediamine, l'éthylènediamine ou la 1,4-cyclohexanediméthylamine ou l'un de leurs mélanges, le polyamide ayant une teneur en triamine inférieure à 0,22 pour-cent en poids après hydrolyse et une teneur en carboxyle en dehors de la plage de 20 à 80 pour-cent par rapport au nombre total de groupements terminaux ;
B) combiner le polyester avec le polyamide sous la forme de granulés de résine, de sorte que les granulés de résine comprennent à la fois le polyester et le polyamide ;
C) chauffer les granulés de résine à une température dans la plage de valeurs de 40 °C à 1 °C inférieures à la température à laquelle les granulés deviennent liquides ; et
D) maintenir les granulés de résine dans la plage de températures sur une période de temps suffisante pour augmenter la viscosité intrinsèque du polyester d'au moins 0,05 dl/g.

**7.** Procédé selon la revendication 6, dans lequel au moins 90 % des radicaux acides du polyester pouvant être cristallisé sont dérivés de l'acide téréphtalique et 90 % des radicaux de glycol du polyester pouvant être cristallisé sont dérivés de l'éthylèneglycol.

**8.** Procédé selon la revendication 6, dans lequel le polyamide est le Nylon MXD6.

**9.** Procédé selon l'une quelconque des revendications 6 à 8, dans lequel le polyester et le polyamide sont combinés dans les granulés, de sorte que le polyamide soit dispersé dans le polyester.

**10.** Procédé selon l'une quelconque des revendications 6 à 8, dans lequel le polyester et le polyamide sont combinés dans des granulés compartimentés comprenant une première zone compartimentée et une seconde zone compartimentée, la première zone compartimentée étant constituée du polyester et la seconde zone compartimentée étant constituée du polyamide.

**11.** Procédé selon la revendication 7, dans lequel les granulés de résine sont chauffés à une température située dans la plage de 165 °C à 235 °C.

**12.** Procédé selon la revendication 6, dans lequel au moins 90 % des radicaux acides du polyester pouvant être cristallisé sont dérivés de l'acide téréphtalique et au moins 90 % des radicaux de glycol du polyester pouvant être cristallisé sont dérivés de l'éthylèneglycol.

**13.** Procédé selon la revendication 11, dans lequel le polyamide est le Nylon MXD6.

**14.** Procédé selon l'une quelconque des revendications 12 et 13, dans lequel le polyester et le polyamide sont combinés dans le granulé, de sorte que le polyamide soit dispersé dans le polyester.

**15.** Procédé selon l'une quelconque des revendications 12 et 13, dans lequel le polyester et le polyamide sont combinés dans des granulés compartimentés comprenant une première zone compartimentée et une seconde zone compartimentée, la première zone compartimentée étant constituée du polyester et la seconde zone compartimentée étant constituée du polyamide.

**16.** Procédé selon la revendication 6, dans lequel le polyester pouvant être cristallisé contient du sulfo-isophtalate de lithium.

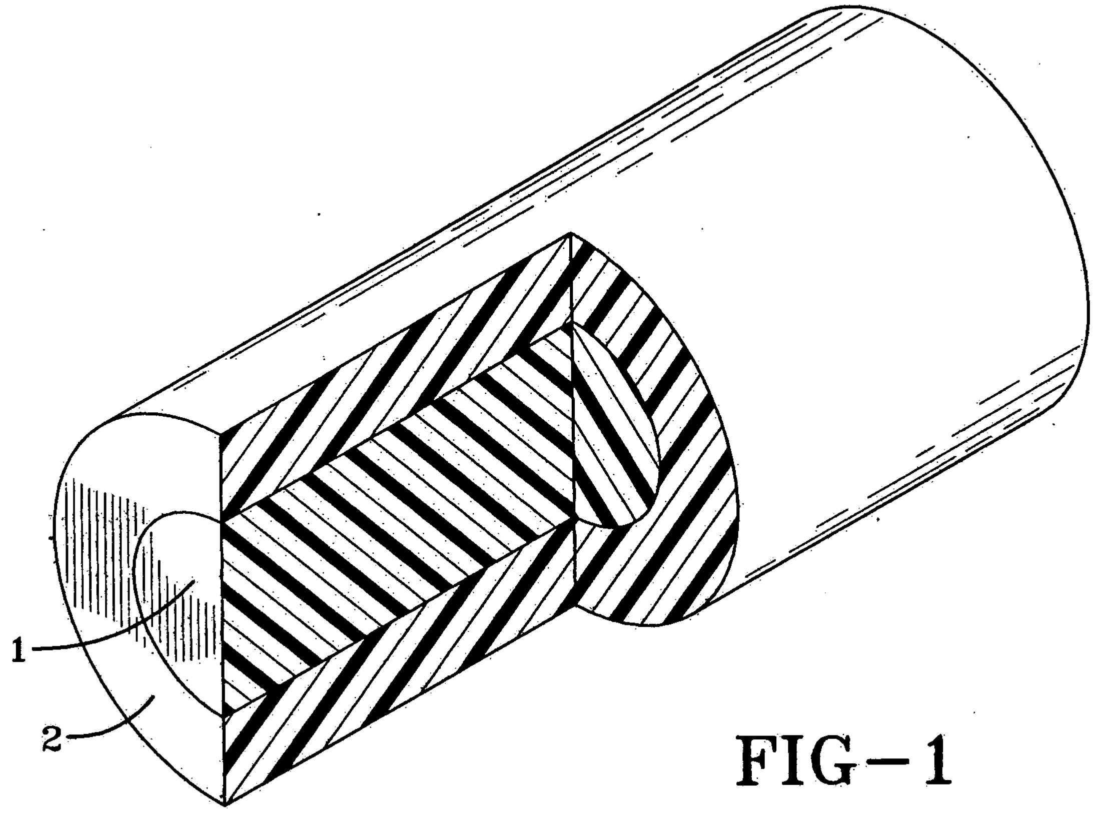


FIG-1

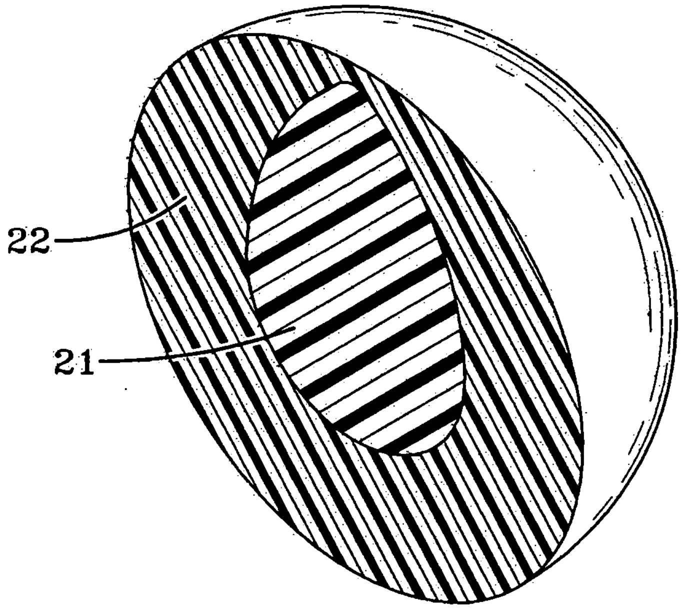


FIG-2

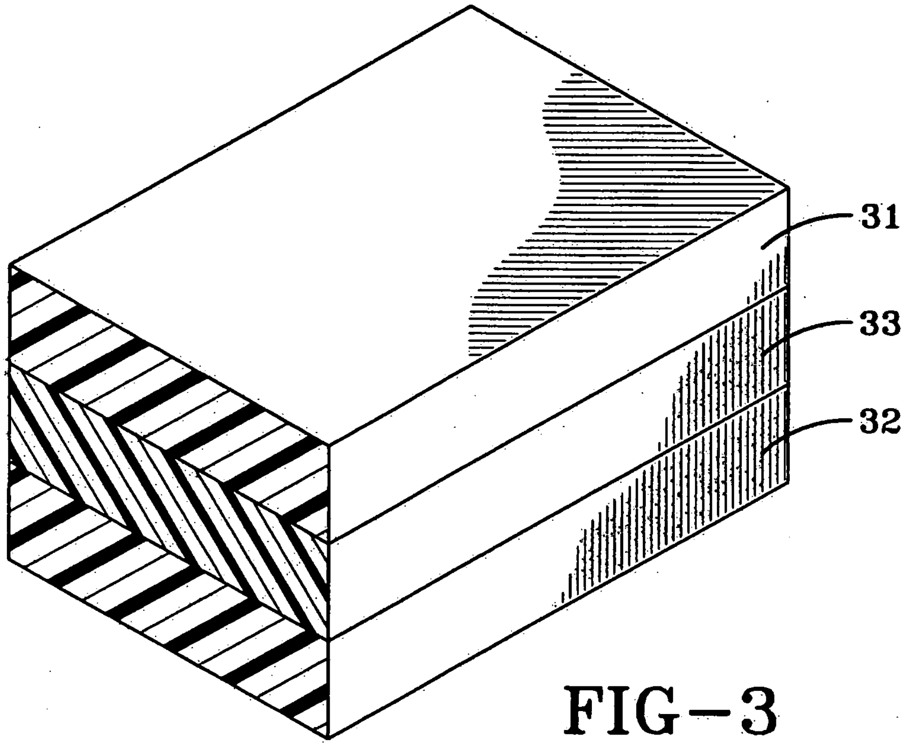


FIG-3

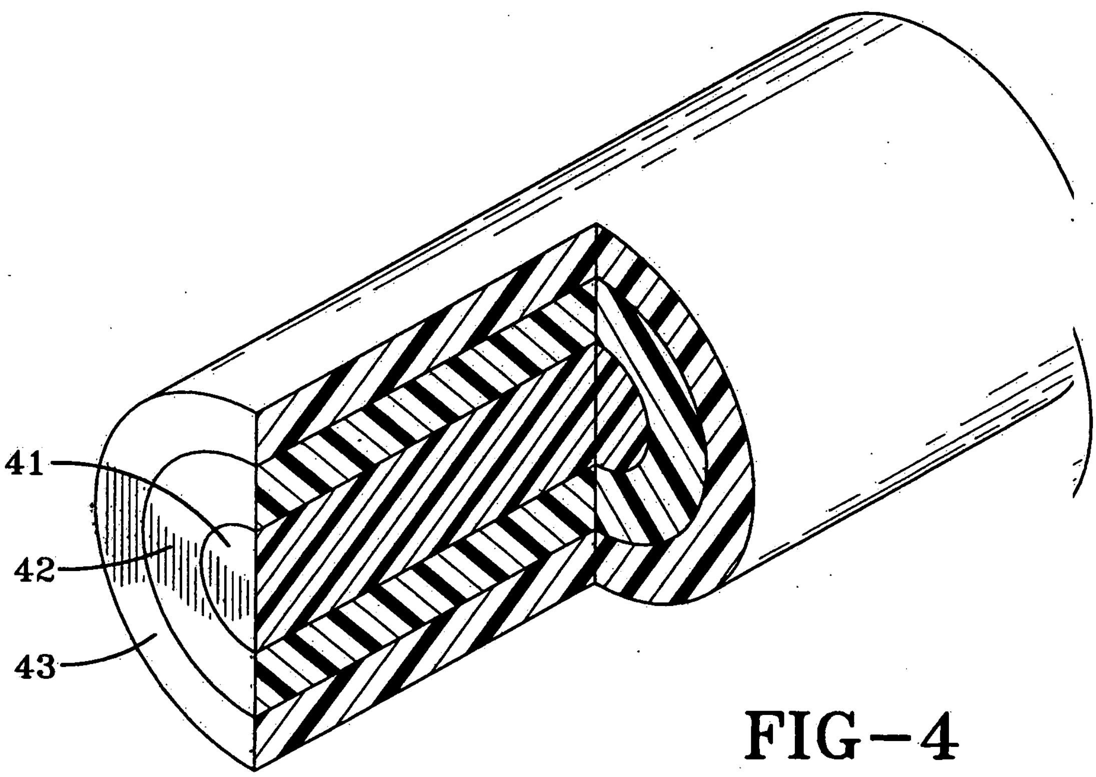


FIG-4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4501781 A
- US 5340884 A
- US 6238233 B
- WO 2005110694 A1
- US 20040013833 A1
- US 3328484 A
- US 5627218 A
- US 5747548 A
- US 6669986 B